(19) **Europäisches Patentamt**
**European Patent Office**
**Office européen des brevets**

(11) **EP 4 510 627 A1**

(12) **EUROPEAN PATENT APPLICATION**
published in accordance with Art. 153(4) EPC

(43) Date of publication:
**19.02.2025 Bulletin 2025/08**

(21) Application number: **23788161.0**

(22) Date of filing: **28.03.2023**

(51) International Patent Classification (IPC):
**H04S 7/00** (2006.01)     **G06T 19/00** (2011.01)

(52) Cooperative Patent Classification (CPC):
**G06T 19/00; H04S 7/00**

(86) International application number:
**PCT/JP2023/012504**

(87) International publication number:
**WO 2023/199741 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2022   US 202263330852 P
15.07.2022   JP 2022113707**

(71) Applicant: **Panasonic Intellectual Property
Corporation
of America
Torrance, CA 90504 (US)**

(72) Inventors:
• **USAMI, Hikaru**
  **Kadoma-shi, Osaka 571-0057 (JP)**
• **ISHIKAWA, Tomokazu**
  **Kadoma-shi, Osaka 571-0057 (JP)**
• **ENOMOTO, Seigo**
  **Kadoma-shi, Osaka 571-0057 (JP)**
• **YAMADA, Mariko**
  **Kadoma-shi, Osaka 571-0057 (JP)**
• **NAKAHASHI, Kota**
  **Kadoma-shi, Osaka 571-0057 (JP)**

(74) Representative: **Novagraaf International SA
Chemin de l'Echo 3
1213 Onex, Geneva (CH)**

(54) **ACOUSTIC SIGNAL PROCESSING DEVICE, ACOUSTIC SIGNAL PROCESSING METHOD,
AND COMPUTER PROGRAM**

(57)     An acoustic signal processing device (100) includes: an obtainer (110) that obtains location information indicating a location of an object in a virtual space, and first shape information indicating a shape of the object and used for generating a video of the object in the virtual space; a detector (120) that detects a moving speed of the object in the virtual space, based on the location information obtained; a generator (130) that generates a first acoustic signal indicating an aerodynamic sound generated by the object, based on the moving speed detected and the first shape information obtained; and an outputter (140) that outputs the first acoustic signal generated.

FIG. 1

EP 4 510 627 A1

**Description**

[Technical Field]

The present disclosure relates to an acoustic signal processing device, and so on.

[Background Art]

Patent Literature (PTL) 1 discloses a technique related to a three-dimensional sound field space reproduction device that is an acoustic signal processing device. This acoustic signal processing device has a Doppler calculation means that performs the Doppler effect processing on a convolved acoustic signal, based on the moving speed of a listener and the moving speed of a sound source. Such an acoustic signal processing device can create a realistic sound reproduction space (i.e., sound field space).

[Citation List]

[Patent Literature]

[PTL 1] Japanese Unexamined Patent Application Publication No. H07-312800

[Summary of Invention]

[Technical Problem]

The background art may however increase the processing load of the acoustic signal processing device to generate an aerodynamic sound caused by movement of an object.
To address the problem, it is an objective of the present disclosure to provide an acoustic signal processing device, and so on, with a reduced processing load for generating an aerodynamic sound caused by movement of an object.

[Solutions to Problem]

An acoustic signal processing device according to an aspect includes: an obtainer that obtains location information indicating a location of an object in a virtual space, and first shape information indicating a shape of the object and used for generating a video of the object in the virtual space; a detector that detects a moving speed of the object in the virtual space, based on the location information obtained; a generator that generates a first acoustic signal indicating an aerodynamic sound generated by the object, based on the moving speed detected and the first shape information obtained; and an outputter that outputs the first acoustic signal generated.
An acoustic signal processing device according to another aspect includes: an obtainer that obtains location information indicating a location of an object in a virtual space, and second shape information indicating a shape of the object and including one or more thicknesses at one or more points of one or more sub-objects forming the object; a detector that detects a moving speed of the object in the virtual space, based on the location information obtained; a generator that generates a first acoustic signal indicating an aerodynamic sound generated by the object, based on the moving speed detected and the second shape information obtained; and an outputter that outputs the first acoustic signal generated. The generator calculates one or more frequencies of aerodynamic sounds generated at the one or more points while the object is moving at the moving speed detected, based on the one or more thicknesses indicated by the second shape information obtained, generates one or more second acoustic signals by processing white noise signals at band pass filters each having, as a center frequency, one of the one or more frequencies calculated, and generates, as the first acoustic signal, one second acoustic signal or a combination of two or more second acoustic signals out of the one or more second acoustic signals generated.
An acoustic signal processing method according to an aspect of the present disclosure includes: obtaining location information indicating a location of an object in a virtual space, and first shape information indicating a shape of the object and used for generating a video of the object in the virtual space; detecting a moving speed of the object in the virtual space, based on the location information obtained; generating a first acoustic signal indicating an aerodynamic sound generated by the object, based on the moving speed detected and the first shape information obtained; and outputting the first acoustic signal generated.
A program according to an aspect of the present disclosure causes a computer to execute the acoustic signal processing method described above.
Note that these general and specific aspects of the present disclosure may be implemented using a system, a device, a method, an integrated circuit, a computer program, or a non-transitory computer-readable recording medium, such as a CD-ROM, or any combination of systems, devices, methods, integrated circuits, computer programs, or recording media.

[Advantageous Effects of Invention]

An acoustic signal processing device according to an aspect of the present disclosure reduces the processing load for generating an aerodynamic sound caused by movement of an object.

[Brief Description of Drawings]

[FIG. 1]

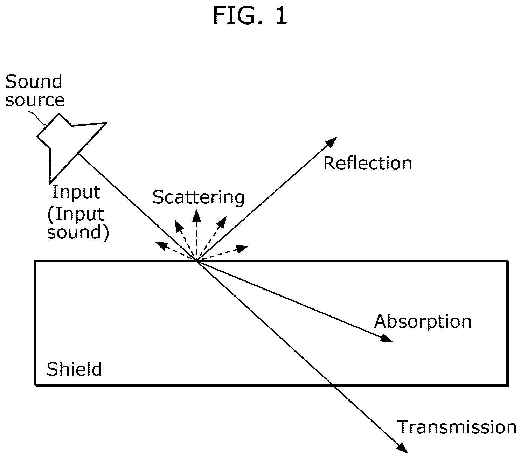

FIG. 1 shows an example reproduced sound with acoustic characteristics changed from when being emitted from a sound source, by a structure (i.e., a shield) in a space.
[FIG. 2]

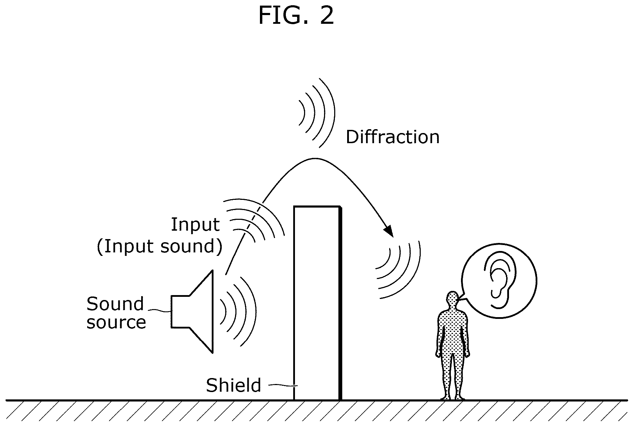

FIG. 2 shows an example reproduced sound with a propagation path changed from when being emitted from a sound source, by a structure (i.e., a shield).
[FIG. 3]

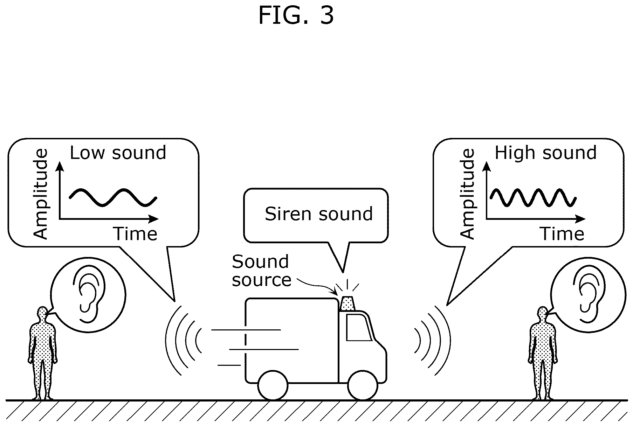

FIG. 3 shows an example reproduced sound with acoustic characteristics changed from when being emitted from a sound source, by movement of the sound source.
[FIG. 4]

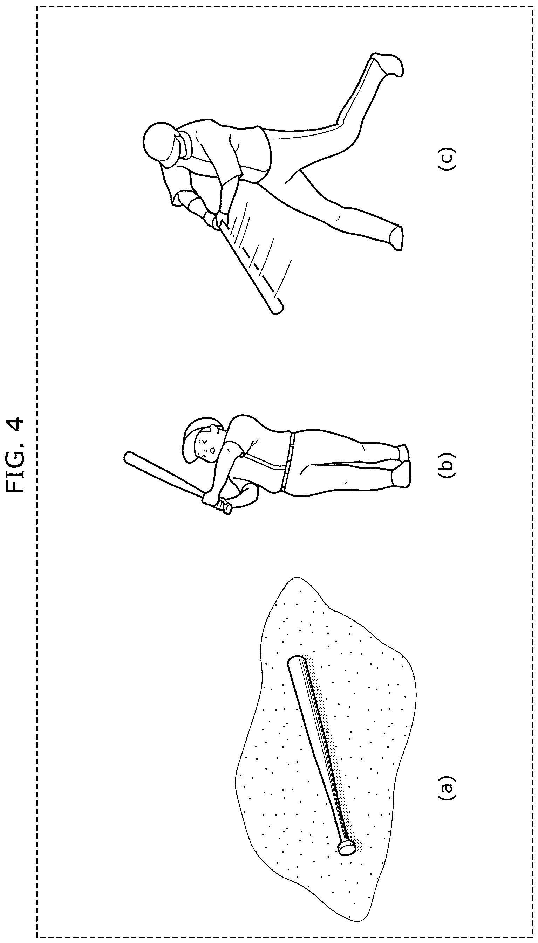

FIG. 4 is for illustrating reproduction of an aerodynamic sound (i.e., the wind sound) caused by movement (i.e., a change in the location) of an object (e.g., a bat).
[FIG. 5]

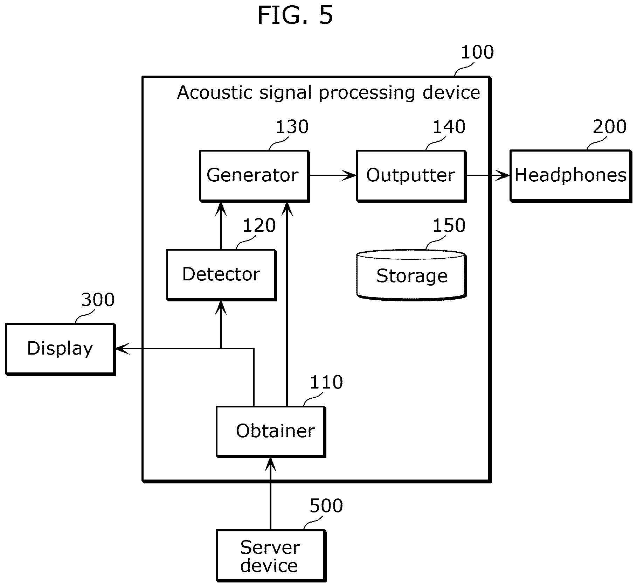

FIG. 5 is a block diagram showing a functional configuration of an acoustic signal processing device according to an embodiment.
[FIG. 6]

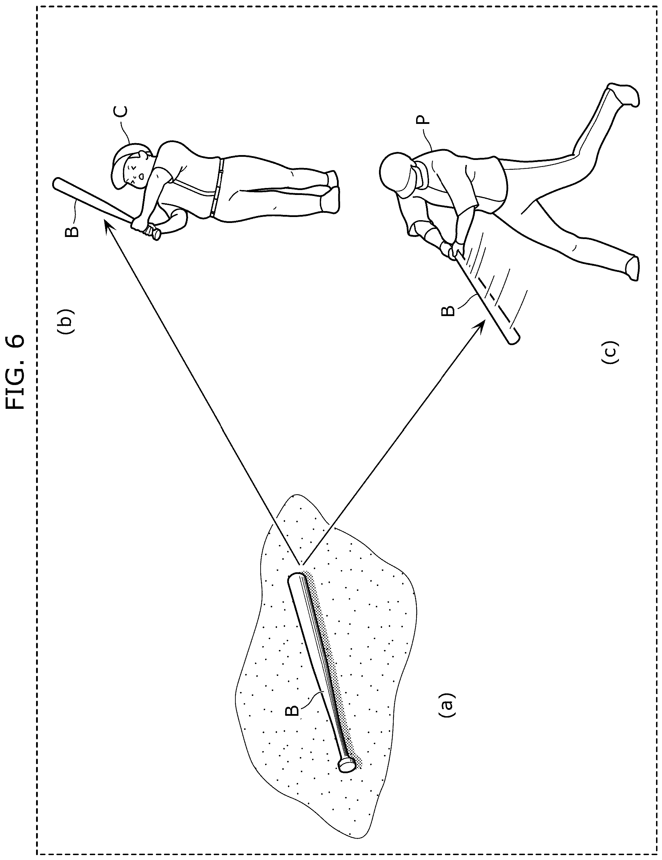

FIG. 6 shows an object (e.g., a bat) according to the embodiment.
[FIG. 7]

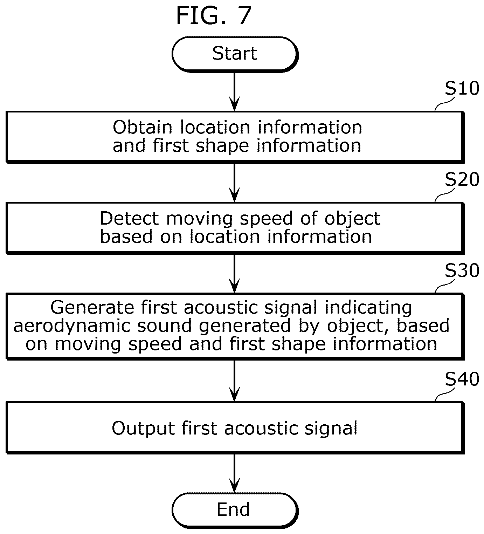

FIG. 7 is a flowchart of Operation Example 1 of the acoustic signal processing device according to the embodiment.
[FIG. 8]

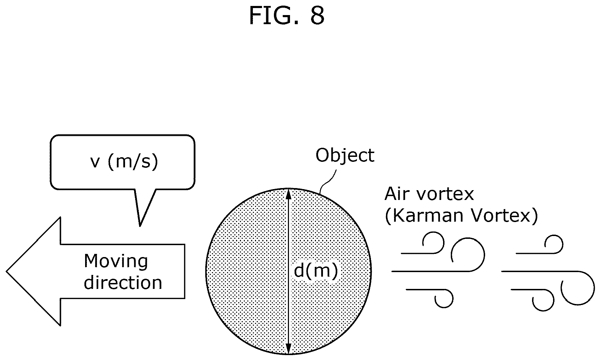

FIG. 8 illustrates a process of generating a first acoustic signal using a generator according to the embodiment.
[FIG. 9]

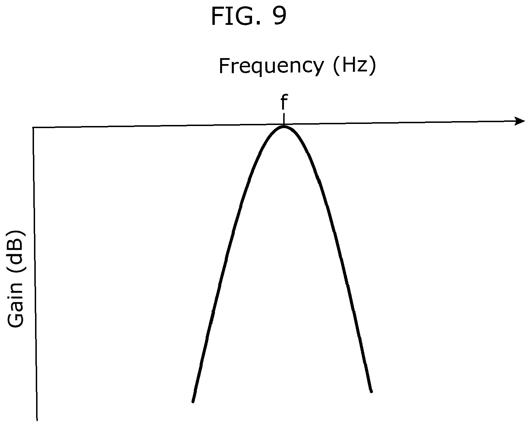

FIG. 9 is an example band pass filter according to Operation Example 1.
[FIG. 10]

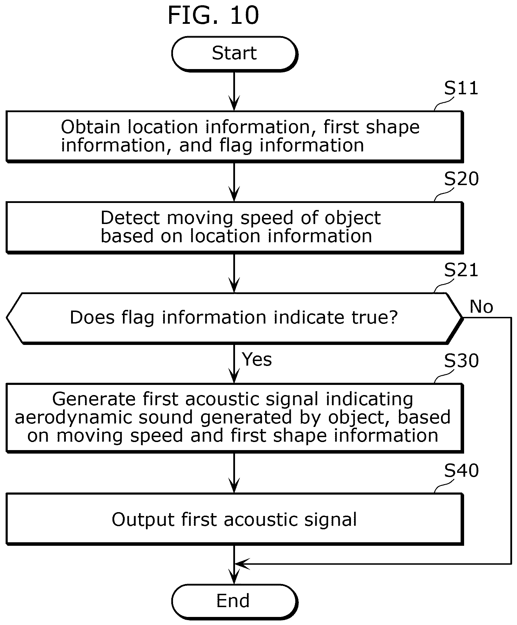

FIG. 10 is a flowchart of Operation Example 2 of the acoustic signal processing device according to the embodiment.
[FIG. 11]

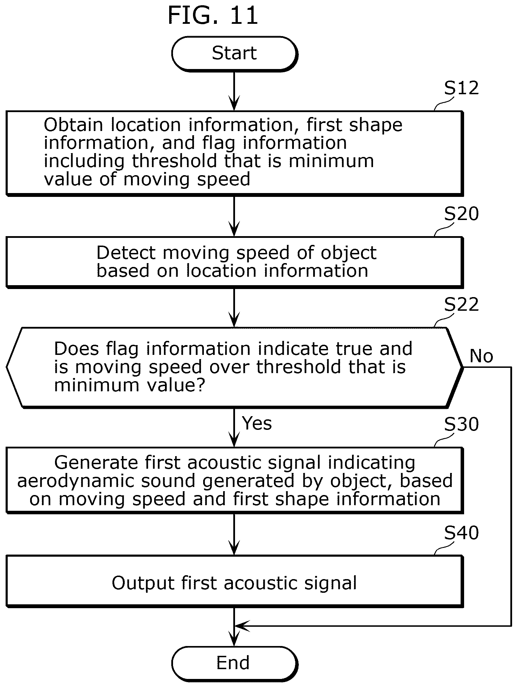

FIG. 11 is a flowchart of Operation Example 3 of the acoustic signal processing device according to the embodiment.
[FIG. 12]

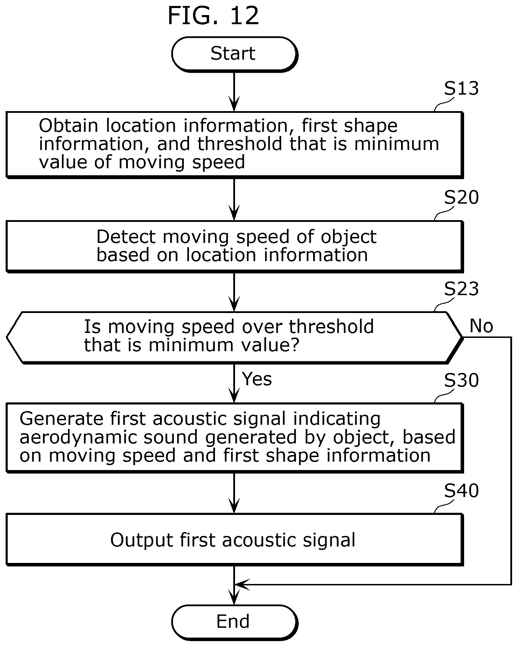

FIG. 12 is a flowchart of Operation Example 4 of the acoustic signal processing device according to the embodiment.
[FIG. 13]

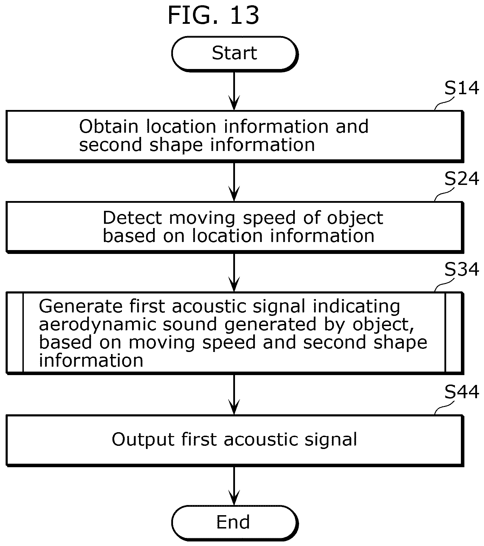

FIG. 13 is a flowchart of Operation Example 5 of the acoustic signal processing device according to the embodiment.
[FIG. 14]

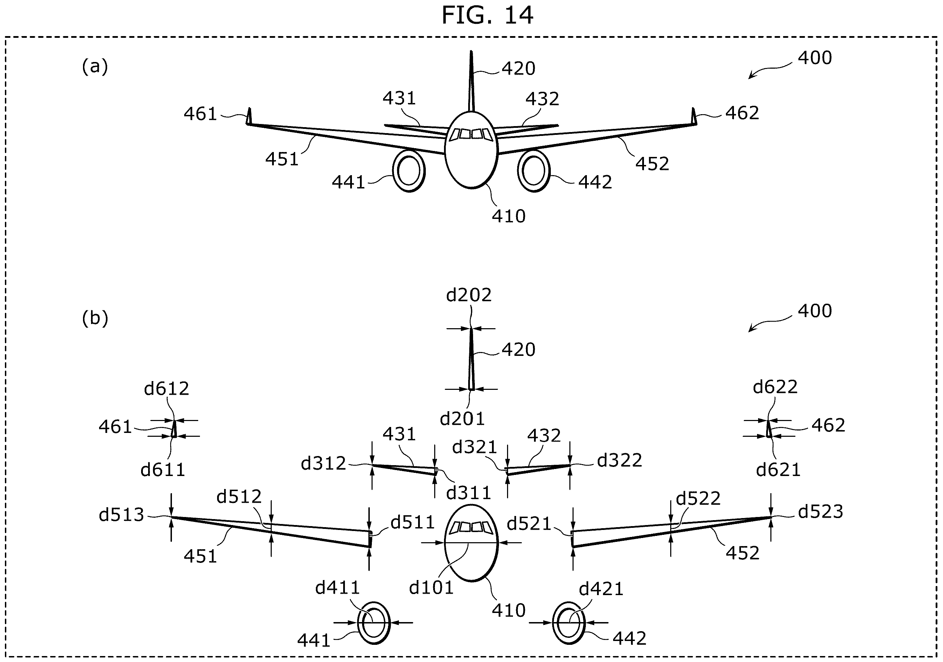

FIG. 14 shows an airplane as an example of the object according to the embodiment.
[FIG. 15]

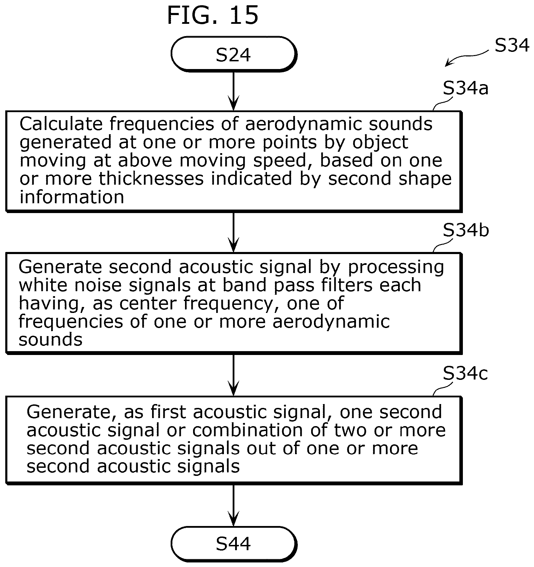

FIG. 15 is a detailed flowchart of Operation Example 5 of the acoustic signal processing device according to the embodiment.
[FIG. 16]

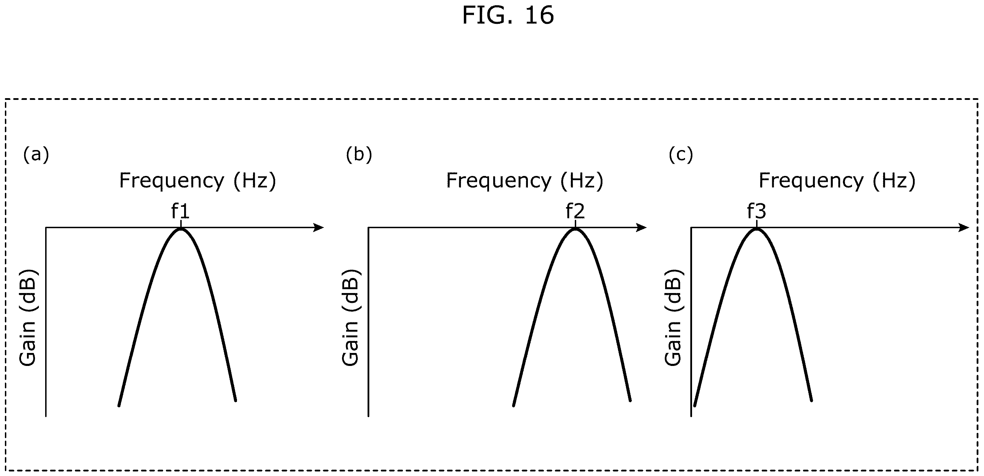

FIG. 16 shows example band pass filters according to Operation Example 5.

[Description of Embodiment]

(Underlying Knowledge Forming Basis of the Present Disclosure)

Acoustic signal processing devices exhibiting the Doppler effect in a sound reproduction space are known.
PTL 1 discloses a technique related to a three-dimensional sound field space reproduction device that is an acoustic signal processing device. This acoustic signal processing device has a Doppler calculation means that performs the Doppler effect processing on a convolved acoustic signal, based on the moving speed of a listener and the moving speed of a sound source that emits a sound (i.e., an object that emits a sound). Such an acoustic signal processing device can create a realistic sound reproduction space (i.e., sound field space).

In an application for reproducing a stereophonic sound in a space, such as virtual reality (VR) or augmented reality (AR), where a user exists, examples of performing acoustic processing on a sound emitted from a sound source are known. These examples will be described with reference to FIGS. 1 to 3.

FIG. 1 shows an example reproduced sound with acoustic characteristics changed from when being emitted from a sound source, by a structure (i.e., a shield) in a space. FIG. 2 shows an example reproduced sound with a propagation path changed from when being emitted from a sound source, by a structure (i.e., a shield). FIG. 3 shows an example reproduced sound with acoustic characteristics changed from when being emitted from a sound source, by movement of the sound source. Note that a process for generating such a reproduced sound is also performed by MPEG-I that reproduces a stereophonic sound in a virtual space, such as the VR or the AR.

As shown in FIG. 1, a sound emitted from a sound source and having reached, as an input (i.e., an input sound), a shield can be reproduced to be scattered, reflected, absorbed, and transmitted.

As shown in FIG. 2, a sound having emitted from a sound source can be reproduced to travel, as an input (i.e., an input sound), around a shield and to be diffracted. Even if the shield is interposed between the sound source and a listener, the reproduced sound can reach the listener's ears.

As shown in FIG. 3, a moving vehicle includes a sound source. A sound (e.g., a siren sound here) emitted from the sound source is subjected to the Doppler effect processing and reaches the listener's ears. A high sound can be reproduced in the direction of travel of the vehicle, and a low sound can be reproduced in the direction opposite to the direction of travel of the vehicle.

In the method for achieving a stereophonic sound described above as well, the sound emitted from the sound source is subjected to the processing.

In various applications in a virtual space, such as VR/AR, a video including a stereophonic space and a structure (or an object) in the space is displayed to a lister using a display, while reproducing the stereophonic sound. The following example shows the case where an object in a virtual space is a bat used in baseball. Reproduction of an aerodynamic sound (i.e., the wind sound) caused by movement (i.e., a change in the location) of this object (i.e., the bat) will be described below with reference to FIG. 4.

FIG. 4 is for illustrating reproduction of an aerodynamic sound (i.e., the wind sound) caused by movement (i.e., a change in the location) of the object (i.e., the bat). More specifically, in FIG. 4, (a) shows a bat as an example of the "object", (b) shows that a child as an example of the "virtual user" is swinging the bat, and (c) shows that a professional baseball player as another example of the "virtual user" is swinging bat B.

As shown in (a) of FIG. 4, while being simply placed on the floor in the virtual space, the bat is not moving, causing no wind sound. That is, in this case, the bat as the object is not associated with any signal (i.e., any acoustic signal) for generating a sound. The aerodynamic sound (i.e., the wind sound) caused by movement of the bat is generated by the following process.

Next, the case shown in (b) of FIG. 4 where a child (i.e., a virtual user) is swinging the bat will be described. In this case, first, the acoustic signal processing device identifies that the virtual user is the child, and detects the event that this child has swung the bat. In addition, the acoustic signal processing device outputs an acoustic signal indicating a wind sound caused by the child swinging the bat to headphones, a speaker, or any other suitable audio device. This allows the listener to listen the wind sound. The acoustic signal needs to be stored in, for example, a storage included in the acoustic signal processing device and is associated with the event that the child has swung the bat.

The case shown in (c) of FIG. 4 where a professional baseball player (i.e., a virtual user) is swinging a bat will be further described. In this case, the acoustic signal processing device identifies that the virtual user is the professional baseball player, and detects the event that this professional baseball player has swung the bat. In addition, the acoustic signal processing device outputs an acoustic signal indicating a wind sound caused by the professional baseball player swinging the bat to headphones, a speaker, or any other suitable audio device. This allows the listener to listen the wind sound. The acoustic signal needs to be stored in, for example, a storage included in the acoustic signal processing device and is associated with the event that the professional baseball player has swung the bat.

The generated wind sounds are different between the case where the virtual user who has swung the bat is a child, and the case where the virtual user who has swung the bat is a professional baseball player. Accordingly, the acoustic signal indicating the wind sound caused by the child swinging the bat and the acoustic signal indicating the wind sound caused by the professional baseball player swinging the bat are different. To handle the difference, there is a need to store acoustic signals according to individual virtual users in advance.

In this manner, in order to generate an aerodynamic sound caused by movement of an object (e.g., a bat), there is a need to perform the identification process of identifying who the virtual user is, the detection process of detecting the event that the virtual user has swung the bat, the output process of obtaining an acoustic signal according to the virtual user from the storage and outputting the acoustic signal. In this manner, there is a need to perform the identification process, the detection process, the output process, and other suitable processes. The processing load of the acoustic signal processing device may thus increase to generate an aerodynamic sound caused by movement of the object (i.e., the bat).

To address the problem, there is a demand for an acoustic signal processing device with a reduced processing load for generating an aerodynamic sound caused by movement of an object.

To meet the demand, an acoustic signal processing device according to an aspect of the present disclosure includes: an obtainer that obtains location information indicating a location of an object in a virtual space, and first shape information indicating a shape of the object and used for generating a video of the object in the virtual space; a detector that detects a moving speed of the object in the virtual space, based on the location information obtained; a generator that generates a first acoustic signal indicating an aerodynamic sound generated by the object, based on the moving speed detected and the first shape information obtained; and an outputter that outputs the first acoustic signal generated.

Accordingly, the acoustic signal processing device can generate the first acoustic signal indicating the aerodynamic sound, based on the first shape information and the moving speed of the object according to the location information. The acoustic signal processing device according to the aspect of the present disclosure can thus generate the first acoustic signal indicating the aerodynamic sound caused by movement of the object, without requiring the identification process, the detection process, the output process, or the other processes described above. This first acoustic signal, for example, is output to headphones, a speaker, or any other suitable audio device, allowing the listener to listen the aerodynamic sound. That is, the acoustic signal processing device according to the aspect of the present disclosure can reduce the processing load for generating an aerodynamic sound caused by movement of an object.

For example, the obtainer may obtain flag information indicating true or false as to whether the object generates the aerodynamic sound. The generator may generate the first acoustic signal when the flag information obtained indicates true.

Accordingly, only when the flag information indicates true, the first acoustic signal is generated. That is, there is no need for the acoustic signal processing device to generate the first acoustic signal, when the flag information indicates false. This can further reduce the processing load for generating an aerodynamic sound caused by movement of an object.

For example, the flag information may include a threshold that is a minimum value of the moving speed of the object that generates the aerodynamic sound. The generator may generate the first acoustic signal when the flag information obtained indicates true and the moving speed detected exceeds the threshold indicated by the flag information obtained.

Accordingly, only when the flag information indicates true and the moving speed is over the threshold, the first acoustic signal is generated. That is, there is no need for the acoustic signal processing device to generate the first acoustic signal, when the flag information indicates false or when the moving speed is lower than or equal to the threshold. This can further reduce the processing load for generating an aerodynamic sound caused by movement of an object.

An acoustic signal processing device according to another aspect of the present disclosure includes: an obtainer that obtains location information indicating a location of an object in a virtual space, and second shape information indicating a shape of the object and including one or more thicknesses at one or more points of one or more sub-objects forming the object; a detector that detects a moving speed of the object in the virtual space, based on the location information obtained; a generator that generates a first acoustic signal indicating an aerodynamic sound generated by the object, based on the moving speed detected and the second shape information obtained; and an outputter that outputs the first acoustic signal generated. The generator calculates one or more frequencies of aerodynamic sounds generated at the one or more points while the object is moving at the moving speed detected, based on the one or more thicknesses indicated by the second shape information obtained, generates one or more second acoustic signals by processing white noise signals at band pass filters each having, as a center frequency, one of the one or more frequencies calculated, and generates, as the first acoustic signal, one second acoustic signal or a combination of two or more second acoustic signals out of the one or more second acoustic signals generated.

Accordingly, the acoustic signal processing device can generate the first acoustic signal indicating the aerodynamic sound, based on the second shape information and the moving speed of the object according to the location information. The acoustic signal processing device according to the aspect of the present disclosure can thus generate the first acoustic signal indicating the aerodynamic sound caused by movement of the object, without requiring the identification process, the detection process, the output process, or the other processes described above. This first acoustic signal, for example, is output to headphones, a speaker, or any other suitable audio device, allowing the listener to listen the aerodynamic sound. That is, the acoustic signal processing device according to the aspect of the present disclosure can reduce the processing load for generating an aerodynamic sound caused by movement of an object.

In addition, the one or more second acoustic signals are generated based on the second shape information. The one or more second acoustic signals each indicate an aerodynamic sound generated at one point of one of one or more sub-objects. Here, the generator generates, as a first acoustic signal, one second acoustic signal or a combination of two or more second acoustic signals. That is, the first acoustic signal indicating an aerodynamic sound generated by the object is generated based on the second acoustic signal(s) indicating the aerodynamic sound(s) generated by the one or more sub-objects. A realistic aerodynamic sound can thus be generated.

An acoustic signal processing method according to an aspect of the present disclosure includes: obtaining location information indicating a location of an object in a virtual space, and first shape information indicating a shape of the object and used for generating a video of the object in the virtual space; detecting a moving speed of the object in the virtual space, based on the location information obtained; generating a first acoustic signal indicating an aerodynamic sound generated by the object, based on the moving speed detected and the first shape information obtained; and outputting the first acoustic signal generated.

Accordingly, the acoustic signal processing method can generate the first acoustic signal indicating the aerodynamic sound, based on the first shape information and the moving speed of the object according to the location information. The acoustic signal processing method according to the aspect of the present disclosure can thus generate the first acoustic signal indicating the aerodynamic sound caused by movement of the object, without requiring the identification process, the detection process, the output process, or the other processes described above. This first acoustic signal, for example, is output to headphones, a speaker, or any other suitable audio device, allowing the listener to listen the aerodynamic sound. That is, the acoustic signal processing method according to the aspect of the present disclosure can reduce the processing load for generating an aerodynamic sound caused by movement of an object.

A computer program according to an aspect of the present disclosure is for causing a computer to execute the acoustic signal processing method described above.

Accordingly, the computer can execute the acoustic signal processing method described above in accordance with the computer program.

These general and specific aspects of the present disclosure may be implemented using a system, a device, a method, an integrated circuit, a computer program, or a non-transitory computer-readable recording medium, such as a CD-ROM, or any combination of systems, devices, methods, integrated circuits, computer programs, or recording media.

Now, an embodiment will be described in detail with reference to the drawings.

The embodiment described below is a general and specific example of the present disclosure. The numerical values, shapes, materials, elements, the arrangement and connection of the elements, steps, step orders etc. shown in the following embodiment are thus mere examples, and are not intended to limit the scope of the present disclosure.

In the following description, ordinal numbers, such as "first", "second", and "third", may be added to elements. These ordinal numbers are added to the elements for the sake of identification, and are not necessarily in a meaningful order. These ordinal numbers may be replaced, may be additionally provided, or may be removed as necessary.

The drawings are schematic representations and not necessarily drawn strictly to scale. The scales are thus not necessarily the same in the drawings. The same reference signs represent substantially the same configurations in the drawings and redundant description will be omitted or simplified.

In the present specification, terms, such as "perpendicular", indicating relationships between elements or the numerical ranges do not have only the exact meaning but include substantially equivalent ranges, for example, with differences of about several percent.


[Embodiment 1]


[Configuration]


First, a configuration of acoustic signal processing device 100 according to Embodiment 1 will be described. FIG. 5 is a block diagram showing a functional configuration of acoustic signal processing device 100 according to this embodiment.

Acoustic signal processing device 100 according to this embodiment is for generating and outputting a first acoustic signal indicating an aerodynamic sound generated by an object in a virtual space. Acoustic signal processing device 100 according to this embodiment is for various applications in a virtual space, such as virtual reality or augmented reality (VR/AR).

The "object in a virtual space" is not particularly limited, as long as being included in a content to be displayed on display 300 that displays contents (i.e., videos here) executed in the virtual space. Examples of the object include an animal, a plant, and an artificial or natural object. Examples of the artificial object include sports equipment, such as a baseball bat and a tennis racket; furniture, such as a desk, a chair, and a wall clock; a building, such as an apartment complex and a commercial facility; and a moving object, such as a vehicle, a bicycle, and an aircraft. Note that the object is, as an example, at least one that can move or one that can be moved in a content in one preferred embodiment but is not limited thereto.

The "aerodynamic sound" according to this embodiment is caused by movement of an object in a virtual space, more specifically, caused by the airflow motion relative to the object in the virtual space.

Acoustic signal processing device 100 generates a first acoustic signal indicating an aerodynamic sound generated by the object in a virtual space, and outputs the first acoustic signal to headphones 200.

Next, headphones 200 will be described.

Headphones 200 serve as a device that reproduces the aerodynamic sound, that is, an audio output devices. More specifically, headphones 200 reproduce the aerodynamic sound based on the first acoustic signal output by acoustic signal processing device 100. This allows the listener to listen the aerodynamic sound. Instead of headphones 200, another output channel, such as a speaker, may be used.

Display 300 is a display device that displays a content (e.g., a video) including an object in a virtual space. The process of display 300 displaying the content will be described later. Display 300 is, for example, a display panel, such as a liquid crystal panel or an organic electroluminescence (EL) panel.

Subsequently, acoustic signal processing device 100 shown in FIG. 5 will be described.

As shown in FIG. 5, acoustic signal processing device 100 includes obtainer 110, detector 120, generator 130, outputter 140, and storage 150.

Obtainer 110 obtains location information and first shape information. The location information indicates the location of an object in a virtual space. The first shape information indicates the shape of the object in the virtual space.

In this embodiment, obtainer 110 obtains the location information and the first shape information from a device (e.g., server device 500, such as a cloud server) other than acoustic signal processing device 100. The source is however not limited thereto.

Now, the location information and the first shape information will be described.

First, the location information will be described.

As described above, an "object in a virtual space" is included a "content (e.g. a video) to be displayed on display 300" and is at least one that can move or one that can be moved in the content in one preferred embodiment. FIG. 6 shows an object (e.g., bat B) according to this embodiment. In FIG. 6, (a) shows bat B as an example of the "object", (b) shows that child C as an example of the "virtual user" is swinging bat B, and (c) shows that professional baseball player P as another example of the "virtual user" is swinging bat B.

As shown in FIG. 6, the "object in a virtual space" is bat B. In the virtual space, bat B as the "object" is the one that can be moved by a virtual user (e.g., child C or professional baseball player P). The location information indicates where in the virtual space bat B is located at a certain time point. As shown in FIG. 6, since bat B can be moved by the virtual user in the virtual space, the location of bat B may change. To address this, obtainer 110 obtains the location information continuously. For example, obtainer 110 obtains the location information every certain period of time.

Next, the first shape information will be described.

The first shape information indicates the shape of the object (e.g., bat B here) in the virtual space. The first shape information indicates the shape of the object, more specifically, the three-dimensional shape of the object as a rigid body. The shape of the object is, for example, represented by a sphere, a rectangular parallelepiped, a cube, a polyhedron, a cone, a pyramid, a cylinder, or a prism alone or in combination. Note that the first shape information may be expressed, for example, by voxels, point groups in three dimensions, or a set of planes formed of vertices with three-dimensional coordinates.

Note that the location information includes identification information for identifying the object. The first shape information also includes the identification information for identifying the object.

Assume that obtainer 110 obtains the location information and the first shape information independently from each other. Even in this case, the identification information included in each of the location information and the first shape information is referred to so as to identify the objects indicated by the location information and the first shape information. For example, the "objects indicated by the location information and the first shape information" can be here easily identified as same bat B. That is, two sets of identification information of the location information and first shape information obtained by obtainer 110 are referred to so as to clarify that both the location information and the first shape information are related to bat B. Accordingly, the location information and the first shape information are associated as the information "indicating bat B.

The location information and the first shape information are subjected to an encoding process. That is, obtainer 110 obtains and decodes the location information and the first shape information. Obtainer 110 performs the decoding process.

Obtainer 110 outputs the obtained location information and first shape information. More specifically, obtainer 110 outputs the obtained location information to detector 120, and the obtained first shape information to generator 130.

Detector 120 detects the moving speed of the object (i.e., bat B) in the virtual space, based on the location information obtained by obtainer 110. As described above, obtainer 110 obtains the location information indicating the location of the object in the virtual space every certain period of time. Detector 120 calculates the moving speed of the object in the virtual space, that is, detects the moving speed by differentiating the location of the object in the virtual space with respect to time, based on the location information (more specifically, sets of location information) obtained every certain period of time. Detector 120 outputs the detected moving speed to generator 130.

Generator 130 generates a first acoustic signal indicating an aerodynamic sound generated by the object, based on the moving speed detected by detector 120 and the first shape information obtained by obtainer 110. The "aerodynamic sound generated by the object" is based on this Kármán vortex. Generator 130 thus calculates the Kármán vortex frequency based on the moving speed and the first shape information, and generates the first acoustic signal based on the calculated Kármán vortex frequency. The details will be described later. Generator 130 outputs the generated first acoustic signal to outputter 140.

Outputter 140 outputs the first acoustic signal generated by generator 130. Here, outputter 140 outputs the first acoustic signal to headphones 200. This allows headphones 200 to reproduce the aerodynamic sound indicated by the output first acoustic signal.

Storage 150 is a storage device that stores computer programs to be executed by obtainer 110, detector 120, generator 130, outputter 140, or other elements.

Now, the first shape information according to this embodiment will be described again. The first shape information indicates the shape of the object (i.e., bat B), and is used for generating a video of the object in the virtual space. That is, the first shape information is also used for generating a content (e.g. a video) to be displayed on display 300.

Obtainer 110 outputs the obtained first shape information to display 300 as well. Display 300 obtains the first shape information output by obtainer 110. Display 300 further obtains attribute information indicating the attribute (e.g., the color), other than the shape, of the object (i.e., bat B) in the virtual space. Display 300 may directly obtain the attribute information from a device (e.g., server device 500) other than acoustic signal processing device 100, or may obtain the attribute information from acoustic signal processing device 100. Display 300 generates a content (e.g., a video) based on the obtained first shape information and attribute information, and displays the content. Display 300 according to this embodiment displays a content including a video showing child C swinging bat B and/or professional baseball player P swinging bat B as shown in FIG. 6.

Now, Operation Examples 1 to 5 of an acoustic signal processing method performed by acoustic signal processing device 100 will be described.

[Operation Example 1]

FIG. 7 is a flowchart of Operation Example 1 of acoustic signal processing device 100 according to this embodiment.

First, obtainer 110 obtains location information indicating the location of an object (e.g., bat B) in a virtual space, and first shape information indicating the shape of the object and used for generating a video of the object in the virtual space (S10). Note that this step S10 corresponds to "obtaining".

Obtainer 110 obtains the location information continuously, more specifically, every certain period of time. That is, obtainer 110 repeats the process of obtaining the location information every certain period of time. Obtainer 110 outputs each location information to detector 120 every time when obtaining the location information, or obtains certain sets of location information and then outputs the certain sets of location information collectively to detector 120. That is, obtainer 110 outputs sets of location information to detector 120. Obtainer 110 also outputs the obtained first shape information to generator 130.

Next, detector 120 detects the moving speed of the object (i.e., bat B) in the virtual space, based on the location information obtained by obtainer 110 (S20). Note that this step S20 corresponds to "detecting". As described above, detector 120 detects the moving speed of the object in the virtual space by differentiating the location of the object in the virtual space with respect to time, based on the sets of location information. Detector 120 outputs the detected moving speed to generator 130.

Generator 130 generates a first acoustic signal indicating an aerodynamic sound generated by the object, based on the moving speed detected by detector 120 and the first shape information obtained by obtainer 110 (S30). Note that this step S30 corresponds to "generating".

Now, the process of generating the first acoustic signal using generator 130 will be described with reference to FIG. 8.

FIG. 8 illustrates the process of generating the first acoustic signal using generator 130 according to this embodiment. The object is moving in the moving direction. v (m/s) represents the moving speed of the object detected by detector 120. d (m) represents the length of the object in the direction perpendicular to the moving direction. This length of the object is example information of the first shape information.

Backward of the object corresponds to the direction opposite to the moving direction of the object. At this time, the air vortex (i.e., the Kármán vortex) occurs backward of the object. The "aerodynamic sound generated by the object" is caused by this Kármán vortex. Accordingly, f represents the Kármán vortex frequency that is the frequency of the air vortex (i.e., the Kármán vortex) and satisfies Equation (1).

$$f = (St \times v) \div d \qquad\qquad . . . (1)$$

Note that St represents the Strouhal number and is about 0.2, for example. The Kármán vortex frequency corresponds to the frequency of an aerodynamic sound. Generator 130 calculates f that is the Kármán vortex frequency in accordance with Equation (1). Generator 130 generates the first acoustic signal by processing a white noise signal using a band pass filter having this f as the center frequency. FIG. 9 shows an example of the band pass filter according to Operation Example 1. The band pass filter shown in FIG. 9 causes a frequency component having f as the center frequency to pass therethrough. Generator 130 extracts the frequency component of the band pass filter having f shown in FIG. 9 as the center frequency from the white noise signal and regards the frequency component as the first acoustic signal. Note that the center frequency is the peak frequency of the gain of the band pass filter.

Generator 130 outputs the generated first acoustic signal to outputter 140.

Outputter 140 outputs the first acoustic signal generated by generator 130 (S40). Note that step S40 corresponds to "outputting". Here, outputter 140 outputs the first acoustic signal to headphones 200. This allows headphones 200 to reproduce the aerodynamic sound indicated by the output first acoustic signal.

In this manner, acoustic signal processing device 100 can generate the first acoustic signal indicating the aerodynamic sound, based on the first shape information and the moving speed of the object (i.e., bat B) according to the location information.

For example, assume that a higher moving speed (e.g., the case where professional baseball player P is swinging bat B) is detected in step S20. In this case, a band pass filter having a higher Kármán vortex frequency as the center frequency is used to process the white noise signal to generate the first acoustic signal.

For example, assume that a lower moving speed (e.g., the case where child C is swinging bat B) is detected in step S20. In this case, a band pass filter having a lower Kármán vortex frequency as the center frequency is used to process the white noise signal to generate the first acoustic signal.

As a result, headphones 200 output different aerodynamic sounds between the case where detector 120 has detected a higher moving speed and the case where detector 120 has detected a lower moving speed. More specifically, since the aerodynamic sound according to the moving speed of the object is here output, a realistic sound reproduction space is achieved. For example, since different aerodynamic sounds are output between the case where professional baseball player P has swung bat B and the case where child C has swung bat B, a realistic sound reproduction space is achieved.

In this manner, the first acoustic signal indicating the aerodynamic sound is generated based on the moving speed of the object (i.e., bat B) and the first shape information, and the aerodynamic sound indicated by the first acoustic signal is reproduced.

In Operation Example 1, there is no need for acoustic signal processing device 100 to identify who the virtual user that has moved the object is. For example, as shown in FIG. 6, there is no need to identify whether child C or professional baseball player P is swinging bat B. Even without identifying who the virtual user that has moved bat B is, generator 130 can generate the first acoustic signal based on the moving speed of bat B and the first shape information. That is, there is no need to perform the identification process of identifying who the virtual user is, which has been described in the "Underlying Knowledge Forming Basis of the Present Disclosure".

There is also no need to detect the event that the virtual user has swung bat B. This is because, even without detecting the event, generator 130 can generate the first acoustic signal based on the moving speed of bat B and the first shape information. That is, there is no need to perform the detection process of detecting the event that the virtual user has swung bat B, which has been described in the "Underlying Knowledge Forming Basis of the Present Disclosure".

Generator 130 itself can generate and output the first acoustic signal. There is thus no need to obtain and output a signal stored in storage 150, for example. That is, there is no need to perform the output process of obtaining and outputting an acoustic signal according to the virtual user, which has been described in the "Underlying Knowledge Forming Basis of the Present Disclosure".

The technique described in the "Underlying Knowledge Forming Basis of the Present Disclosure" requires the identification process, the detection process, and the output process. Acoustic signal processing device 100 according to this embodiment however requires none of these processes. That is, with the processing load reduced, acoustic signal processing device 100 can generate the first acoustic signal indicating the aerodynamic sound caused by movement of the object (i.e., bat B). This first acoustic signal is output to headphones 200, for example, allowing the listener to listen the aerodynamic sound. That is, acoustic signal processing device 100 with a reduced processing load for generating an aerodynamic sound caused by movement of an object (e.g., bat B) is achieved.

In addition, if the identification process, the detection process, and the output process described in the "Underlying Knowledge Forming Basis of the Present Disclosure" are performed, the following problem may further occur. In this case, it is essential that, for example, storage 150 stores, in advance, the event that the virtual user has swung bat B and an acoustic signal indicating the wind sound caused by the virtual user swinging bat B in association. Since each virtual user requires an acoustic signal, a large number of acoustic signals needs to be stored. This arises the problem of requiring a large number of hard resources (particularly, a storage device). In addition, there are unknown virtual users (also referred to as "unidentified virtual users"). When an unknown virtual user has swung bat B, who has swung bat B is unclear and no wind sound can be generated.

By contrast, in acoustic signal processing device 100 according to this embodiment, generator 130 itself generates the first acoustic signal. There is no need for storage 150 to store a large number of acoustic signals. A significantly small number of hard resources are thus required. Assume that an unknown virtual user, who is neither child C nor professional baseball player P, for example, has swung bat B. Even in this case, the first acoustic signal indicating the aerodynamic sound is generated based on the moving speed of bat B and the first shape information. An aerodynamic sound can thus be reproduced, even if an unknown virtual user has swung bat B.

In this manner, acoustic signal processing device 100 according to this embodiment is implemented as a device with a reduced processing load for generating an aerodynamic sound caused by movement of an object (e.g., bat B) as shown in Operation Example 1. In addition, acoustic signal processing device 100 is achieved using only a significantly small number of hard resources, and can reproduce an aerodynamic sound even when an unknown virtual user has swung bat B.

[Operation Example 2]

FIG. 10 is a flowchart of Operation Example 2 by acoustic signal processing device 100 according to this embodiment. In Operation Example 2, step S10 shown in Operation Example 1 is replaced with step S11, and step S21 is performed in addition to Operation Example 1. In these points, Operation Example 2 is different from Operation Example 1. The differences from Operation Example 1 will be mainly described below, and the description of the common matters is omitted or simplified.

First, obtainer 110 obtains location information indicating the location of an object (e.g., bat B) in a virtual space, first shape information indicating the shape of the object and used for generating a video of the object in the virtual space, and flag information (S11).

The flag information indicates true or false as to whether the object generates an aerodynamic sound. The flag information is an example of metadata related to the object.

Whether the flag information indicates true or false is determined in advance in accordance with the object indicated by the flag information. For example, whether the flag information indicates true or false is determined by an administrator of the content (i.e., the video) displayed on display 300.

Here, if the object is at least one that can move or one that can be moved in the virtual space, the flag information representing the object indicates true. For example, if the object is bat B, the flag information representing the object (i.e., bat B) indicates true.

If the object is neither one that can move nor one that can be moved in the virtual space, the flag information representing the object indicates false. For example, if the object is a wall clock, the flag information representing the object (i.e., the wall clock) indicates false. In other words, if the flag information indicates true, the object indicated by the flag information corresponds to at least one that can move or one that can be moved in the virtual space. More specifically, if the flag information indicates true, the object indicated by the flag information is at least one that can move or one that can be moved at a high speed in the virtual space in one preferred embodiment. If the flag information indicates false, the object indicated by the flag information is neither one that can move nor one that can be moved in the virtual space.

Note that the flag information also includes identification information like the location information and the first shape information. The identification information included in each of the location information, the first shape information, and the flag information is referred to so as to easily identify that the objects indicated by the location information, the first shape information, and the flag information are same bat B, for example.

The flag information is also subjected to an encoding process in one preferred embodiment. That is, obtainer 110 obtains and decodes the flag information. Obtainer 110 performs the decoding process.

Obtainer 110 outputs the obtained location information to detector 120, and the obtained first shape information and flag information to generator 130.

Next, step S20 is performed.

Generator 130 determines whether the obtained flag information indicates true (S21).

If the flag information indicates true, that is, if the object indicated by the flag information is at least one that can move or one that can be moved in the virtual space (Yes in step S21), the process in step S30 is performed.

In addition, the process in step S40 is performed, that is, the first acoustic signal is generated.

If the flag information indicates false, that is, if the object indicated by the flag information is neither one that can move nor one that can be moved in the virtual space (No in step S21), the process ends. That is, no first acoustic signal is generated.

In this manner, in Operation Example 2, the first acoustic signal is generated only when the flag information indicates true. That is, there is no need for acoustic signal processing device 100 to generate the first acoustic signal when the flag information indicates false. This can further reduce the processing load for generating an aerodynamic sound caused by movement of an object.

In this Operation Example 2, while being an example of the metadata related to the object, the flag information may be included, as a part, in the first shape information. While the flag information indicates true or false as to whether an object generates an aerodynamic sound, whether to generate an aerodynamic sound is determined only by the shape of the object. The shape information and the flag information are inseparable, and it is rational to process both the information integrally (e.g., encode both the information integrally, place the respective values in close points, store the respective values in close memory areas, etc.).

[Operation Example 3]

FIG. 11 is a flowchart of Operation Example 3 by acoustic signal processing device 100 according to this embodiment. In Operation Example 3, step S11 shown in Operation Example 2 is replaced with step S12, and step S21 shown in Operation Example 2 is replaced with step S22. In these points, Operation Example 3 is different from Operation Example 2. The differences from Operation Example 2 will be mainly described below, and the description of the common matters is omitted or simplified.

First, obtainer 110 obtains location information, first shape information, and flag information including a threshold that is the minimum value of the moving speed (S12).

The flag information indicates true or false as to whether the object generates an aerodynamic sound. In this operation example, the flag information includes the threshold that is the minimum value of the moving speed of the object that generates an aerodynamic sound. The threshold is determined in advance in accordance with the object indicated by the flag information. For example, the threshold is determined in advance by an administrator of the content (e.g., the video) displayed on display 300.

Obtainer 110 outputs the obtained location information to detector 120, and the obtained first shape information and flag information to generator 130.

Next, step S20 is performed.

Generator 130 further determines whether the obtained flag information indicates true and the detected moving speed is over the threshold that is the minimum value indicated by the obtained flag information (S22).

Now, a case where the flag information indicates true, that is, where the object indicated by the flag information is at least one that can move or one that can be moved in the virtual space will be studied. In this case, when the moving speed of the object is sufficiently high, the aerodynamic sound caused by movement of the object falls within the audible band of the listener. On the other hand, in this case as well, when the moving speed of the object is sufficiently low, the aerodynamic sound caused by movement of the object does not fall within the audible band of the listener. When the aerodynamic sound does not fall within the audible band of the listener, the process of generating the first acoustic signal indicating the aerodynamic sound is unnecessary. The following process is thus performed in step S22 and the subsequent steps.

First, if the flag information indicates true and the moving speed is over the threshold that is the minimum value (Yes in step S22), the process in step S30 is performed. In this case, the object indicated by the flag information is at least one that can move or one that can be moved in the virtual space, and the moving speed of the object is sufficiently high.

In addition, the process in step S40 is performed, that is, the first acoustic signal is generated.

If the flag information indicates false, or the moving speed is lower than or equal to the threshold that is the minimum value (No in step S22), the process ends. When the flag information indicates false, the object indicated by the flag information is neither one that can move nor one that can be moved in the virtual space. When the moving speed is lower than or equal to the threshold, the moving speed of the object sufficiently low. In such a case, no first acoustic signal is generated.

In this manner, in Operation Example 3, only when the flag information indicates true and the moving speed is over the threshold, the first acoustic signal is generated. That is, when the flag information indicates false, or when the moving speed is lower than or equal to the threshold, there is no need for acoustic signal processing device 100 to generate the first acoustic signal. This can further reduce the processing load for generating an aerodynamic sound caused by movement of an object.

[Operation Example 4]

FIG. 12 is a flowchart of Operation Example 4 by acoustic signal processing device 100 according to this embodiment. In Operation Example 4, step S12 shown in Operation Example 3 is replaced with step S13, and step S22 shown in Operation Example 3 is replaced with step S23. In these points, Operation Example 4 is different from Operation Example 3. The differences from Operation Example 3 will be mainly described below, and the description of the common matters is omitted or simplified.

First, obtainer 110 obtains location information, first shape information, and a threshold that is the minimum value of the moving speed of an object that generates an aerodynamic sound (S13).

That is, in this operation example, obtainer 110 obtains only the threshold of the moving speed out of the flag information, and obtains no information indicating true or false as to whether the object generates an aerodynamic sound.

Obtainer 110 outputs the obtained location information to detector 120, and the obtained first shape information and threshold to generator 130.

Next, step S20 is performed.

Generator 130 determines whether the detected moving speed is over the obtained threshold that is the minimum value (S23).

If the moving speed is over the threshold that is the minimum value (Yes in step S23), the process in step S30 is performed. In this case, the moving speed of the object is sufficiently high.

In addition, the process in step S40 is performed, that is, the first acoustic signal is generated.

If the moving speed is lower than or equal to the threshold that is the minimum value (No in step S23), the process ends. When the moving speed is lower than or equal to the threshold, the moving speed of the object sufficiently low. In such a case, no first acoustic signal is generated.

In this manner, in Operation Example 4, only when the moving speed is over the threshold, the first acoustic signal is generated. There is no need for generator 130 to determine whether the obtained flag information indicates true. Acoustic signal processing device 100 can thus further reduce the processing load for generating an aerodynamic sound caused by movement of the object.

[Operation Example 5]

FIG. 13 is a flowchart of Operation Example 5 by acoustic signal processing device 100 according to this embodiment. The differences from Operation Example 1 will be mainly described below, and the description of the common matters is omitted or simplified.

In this operation example, not bat B shown in the operation example described above but airplane 400 as an example aircraft is used as an object. FIG. 14 shows airplane 400 as an example of the object according to this embodiment.

As shown in FIG. 13, first, obtainer 110 obtains location information and second shape information (S14).

Like in Operation Examples 1 to 4, the location information obtained by obtainer 110 indicates the location of the object (i.e., airplane 400 here) in a virtual space. In terms of indicating the shape of the object (i.e., airplane 400 here) in the virtual space, the second shape information is the same as the first shape information. The second shape information includes the thicknesses at one or more points of one or more sub-objects forming the object (i.e., airplane 400 here) in the virtual space.

Now, the second shape information will be described more in detail with reference to FIG. 14. In FIG. 14, (a) shows airplane 400 as an example of the "object", (b) shows the thicknesses at one or more points of one or more sub-objects forming airplane 400 as an example of the "object".

Airplane 400 includes the one or more sub-objects. Here, the one or more sub-objects (more specifically, a plurality of sub-objects) correspond to fuselage 410, vertical stabilizer 420, first horizontal stabilizer 431, second horizontal stabilizer 432, first engine 441, second engine 442, first main wing 451, second main wing 452, first winglet 461, and second winglet 462. That is, it can also be said that the one or more sub-objects are one or more components of the object.

The second shape information further includes the thicknesses at one or more points of one or more sub-objects. Note that the thicknesses at one or more points corresponds to the lengths perpendicular to the moving direction of the object. Alternatively, the thicknesses at one or more points may be the lengths of the sides of a certain plane intersecting the moving direction at a predetermined angle.

In FIG. 14, (b) shows the lengths (i.e., thicknesses) at one or more points in the direction perpendicular to the moving direction of airplane 400.

For example, with respect to fuselage 410, the thickness at one point is shown, which is represented by d101. With respect to vertical stabilizer 420, the thicknesses at two points are shown, which are represented by d201 and d202 in the order from fuselage 410. With respect to first horizontal stabilizer 431, the thicknesses at two points are shown, which are represented by d311 and d312 in the order from fuselage 410. With respect to second horizontal stabilizer 432, the thicknesses at two points are shown, which are represented by d321 and d322 in the order from fuselage 410. With respect to first engine 441, the thickness at one point is shown, which is represented by d411. With respect to second engine 442, the thickness at one point is shown, which is represented by d421. With respect to first main wing 451, the thicknesses at three points are shown, which are represented by d511, d512, and d513 in the order from fuselage 410. With respect to second main wing 452, the thicknesses at three points are shown, which are represented by 521, d522, and d523 in the order from fuselage 410d. With respect to first winglet 461, the thicknesses at two points are shown, which are represented by d611 and d612 in the order from first main wing 451. With respect to second winglet 462, the thicknesses at two points are shown, which are represented by d621 and d622 in the order from second main wing 452.

In this manner, the second shape information includes the thicknesses at one or more points of one or more sub-objects. More specifically, in this operation example, the second shape information includes the thicknesses (d101, d201, d202, d311, d312, d321, d322, d411, d421, d511, d512, d513, d521, d522, d523, d611, d612, d621, and d622) at 19 points of the sub-objects.

Unlike the first shape information, the second shape information is not necessarily used for generating a video of the object in the virtual space.

The second shape information is also subjected to an encoding process in one preferred embodiment. That is, obtainer 110 obtains and decodes the second shape information. Obtainer 110 performs the decoding process.

As described above, in step S14, obtainer 110 obtains the location information and the second shape information. Like in step S10 in Operation Example 1, in step S14, obtainer 110 obtains the location information continuously, more specifically, every certain period of time. That is, obtainer 110 repeats the process of obtaining the location information every certain period of time. Obtainer 110 outputs each location information to detector 120 every time when obtaining the location information, or obtains certain sets of location information and then outputs the certain sets of location information collectively to detector 120. That is, obtainer 110 outputs sets of location information to detector 120. Obtainer 110 also outputs the obtained second shape information to generator 130.

Next, detector 120 detects the moving speed of the object (i.e., airplane 400) in the virtual space, based on the location information obtained by obtainer 110 (S24). This step S24 is the same process as step S20 in Operation Example 1. Detector 120 outputs the detected moving speed to generator 130.

Generator 130 generates a first acoustic signal indicating an aerodynamic sound generated by the object, based on the moving speed detected by detector 120 and the second shape information obtained by obtainer 110 (S34).

Now, the process of generating the first acoustic signal using generator 130 will be described with reference to FIG. 15.

FIG. 15 is a detailed flowchart of Operation Example 5 of acoustic signal processing device 100 according to this embodiment.

After step S24, generator 130 calculates the frequencies of the aerodynamic sounds generated at one or more points of the object (i.e., airplane 400) at the detected moving speed, based on the one or more thicknesses indicated by the obtained second shape information (S34a).

v1 (m/s) represents the moving speed of airplane 400 detected by detector 120. As described above, the one or more thicknesses corresponds to the lengths perpendicular to the moving direction of airplane 400.

Like in Operation Example 1, the air vortex (i.e., the Kármán vortex) occurs backward of the object (i.e., in the direction opposite to the moving direction of the object). As described above, the Kármán vortex frequency corresponds to the frequency of the aerodynamic sound.

Now, in step S24, the frequencies of the aerodynamic sounds generated at one or more points are calculated. More specifically, the frequencies of the aerodynamic sounds generated at the 19 points with the thicknesses included in the second shape information are calculated.

An example of this calculation will be described. Here, the frequencies (i.e., the Kármán vortex frequencies) of the aerodynamic sounds at one point of fuselage 410 and two points of vertical stabilizer 420 will be described.

f1 represents the frequency of the aerodynamic sound generated at the one point (i.e., the point with thickness d101) of fuselage 410. f2 represents the frequency of the aerodynamic sound generated at the one (i.e., the point with thickness d201) of the two points of vertical stabilizer 420, which is closer to fuselage 410. f3 represents the frequency of the aerodynamic sound generated at the one (i.e., the point with thickness d202) farther from fuselage 410. In this case, f1, f2, and f3 satisfy following Equations (2), (3), and (4), respectively.

$$f1 = (St \times v1) \div d101 \qquad \qquad \ldots (2)$$

$$f2 = (St \times v1) \div d201 \qquad \qquad \ldots (3)$$

$$f3 = (St \times v1) \div d202 \qquad \qquad \ldots (4)$$

Note that St represents the Strouhal number. While the above points are described in the example of this calculation, the same calculation is performed for the other 16 points of the 19 points in total, which are not described in the example. As a result, in this operation example, the frequencies of 19 aerodynamic sounds in total are calculated. In this manner, generator 130 calculates the frequencies of the aerodynamic sounds generated at one or more points (a plurality of points here).

Subsequently, generator 130 generates a second acoustic signal by processing white noise signals using band pass filters each having one of the calculated frequencies of the one or more aerodynamic sounds as the center frequency (S34b).

FIG. 16 is example band pass filters according to Operation Example 5. More specifically, in FIG. 16, (a) shows a filter that causes a frequency component having f1 as the center frequency to pass therethrough. In FIG. 16, (b) shows a filter that causes a frequency component having f2 as the center frequency to pass therethrough. In FIG. 16, (c) shows a filter that causes a frequency component having f3 as the center frequency to pass therethrough. Note that the center frequency is the peak frequency of the gain of the band pass filter.

Generator 130 extracts the frequency component of the band pass filter having f1 shown in (a) of FIG. 6 as the center frequency from the white noise signal and generates the second acoustic signal (hereinafter referred to as "second acoustic signal A" for identification) at the point with thickness d101 of fuselage 410. Note that this second acoustic signal A indicates the aerodynamic sound generated at the point with thickness d101 of fuselage 410. Generator 130 extracts, for example, the frequency component of the band pass filter having f2 shown in (b) of FIG. 6 as the center frequency from the white noise signal and generates the second acoustic signal (hereinafter referred to as "second acoustic signal D" for identification) at the point with thickness d201 of vertical stabilizer 420. Note that this second acoustic signal D indicates the aerodynamic sound generated at the point with thickness d201 of vertical stabilizer 420. Generator 130 extracts, for example, the frequency component of the band pass filter having f3 shown in (c) of FIG. 6 as the center frequency from the white noise signal and generates the second acoustic signal (hereinafter referred to as "second acoustic signal E" for identification) at the point with thickness d202 of vertical stabilizer 420. Note that this second acoustic signal E indicates the aerodynamic sound generated at the point with thickness d202 of vertical stabilizer 420.

As described above, the frequencies of the 19 aerodynamic sounds are calculated. Accordingly, in this operation example, 19 second acoustic signals including second acoustic signal A, second acoustic signal D, and second acoustic signal E are generated in total.

Generator 130 generates, as the first acoustic signal, one second acoustic signal or a combination of two or more second acoustic signals, out of the one or more generated second acoustic signals (S34c).

For example, generator 130 generates, as the first acoustic signal, any one second acoustic signal (e.g., second acoustic signal A) out of the 19 generated second acoustic signals. For example, generator 130 generates, as the first acoustic signal, a combination of two or more (e.g., three) second acoustic signals (e.g., second acoustic signal A, second acoustic signal D, and second acoustic signal E) out of the 19 generated second acoustic signals. For example, generator 130 may generate, as the first acoustic signal, the combination of all the one or more generated second acoustic signals.

For example, assume that generator 130 generates, as the first acoustic signal, a combination of two or more second acoustic signals out of one or more second acoustic signals. In this case, generator 130 may generate, as the first acoustic signal, a combination of two or more weighted second acoustic signals. In this case, for example, the signal obtained by combining two or more second acoustic signals, each being multiplied by a weighting coefficient is generated as the first acoustic signal.

Generator 130 outputs the generated first acoustic signal to outputter 140.

Outputter 140 outputs the first acoustic signal generated by generator 130 (S44). Here, outputter 140 outputs the first acoustic signal to headphones 200. This allows headphones 200 to reproduce the aerodynamic sound indicated by the output first acoustic signal.

In this manner, in Operation Example 5, acoustic signal processing device 100 according to this embodiment is implemented as a device with a reduced processing load for generating an aerodynamic sound caused by movement of an object (e.g., airplane 400) as shown in Operation Example 1. In addition, acoustic signal processing device 100 is achieved using only a significantly small number of hard resources.

In addition, acoustic signal processing device 100 generates one or more second acoustic signals based on the second shape information. These second acoustic signals each indicate an aerodynamic sound generated at one point of a sub-object out of one or more sub-objects. Acoustic signal processing device 100 generates, as the first acoustic signal, one second acoustic signal or a combination of two or more second acoustic signals out of the one or more generated second acoustic signals. That is, in Operation Example 5, the first acoustic signal indicating the aerodynamic sound generated by the object (i.e., airplane 400), based on the aerodynamic sounds generated by one or more sub-objects (e.g., fuselage 410 and vertical stabilizer 420). Accordingly, acoustic signal processing device 100 can be achieved which can allow headphones 200 to reproduce a more realistic aerodynamic sound.

In this Operation Example 5, the flag information (i.e., information indicating true or false as to whether the object generates an aerodynamic sound) is not used, which is shown in Operation Example 2. Second shape information may be obtained as follows in step S14 using the same or similar flag information. Specifically, in step S14, if the flag information is obtained, which indicates true (i.e., the object can generate an aerodynamic sound), the second shape information is obtained. The second shape information obtained here is not necessarily extracted directly (i.e., automatically) from the shape information displayed on display 300. The second shape information may be specified by the administrator of the content (i.e., the video) displayed on this display 300. For example, in the example of airplane 400 shown in FIG. 14, the value related to fuselage 410 is not necessarily specified here. The values related to first main wing 451 and second main wing 452 may be specified here. In addition, with respect to first main wing 451, value d511 of the proximal end (i.e., the thickness at the point closest to fuselage 410) is not necessarily specified. Value d513 of the distal end (i.e., the thickness at the point farthest to fuselage 410) may be specified. This is a selection taking into account the priority that an aerodynamic sound is, as an audible sound, perceived by human and is to directly reflect the intention of the administrator of the content (i.e., the video). At the same time, it also contributes the reduction in the number of computational resources needed to generate the aerodynamic sound.

The summary of this embodiment is as follows.

Acoustic signal processing device 100 according to this embodiment includes obtainer 110, detector 120, generator 130, and outputter 140. Obtainer 110 obtains location information indicating a location of an object in a virtual space, and first shape information indicating the shape of an object and used for generating a video of the object in the virtual space. Detector 120 detects the moving speed of the object in the virtual space, based on the obtained location information. Generator 130 generates a first acoustic signal indicating an aerodynamic sound generated by the object, based on the detected moving speed and the obtained first shape information. Outputter 140 outputs the generated first acoustic signal.

Accordingly, as shown in Operation Example 1, acoustic signal processing device 100 according to this embodiment can generate the first acoustic signal indicating the aerodynamic sound (i.e., the wind sound), based on the first shape information and the moving speed of the object (i.e., bat B) according to the location information. Accordingly, acoustic signal processing device 100 can generate the first acoustic signal indicating an aerodynamic sound (i.e., the wind sound) caused by movement of the object (i.e., bat B), without requiring the identification process, the detection process, the output process, or the other processes described above. This first acoustic signal, for example, is output to headphones 200, allowing the listener to listen the aerodynamic sound (i.e., the wind sound). That is, acoustic signal processing device 100 with a reduced processing load for generating an aerodynamic sound (i.e., the wind sound) caused by movement of an object is achieved.

In this embodiment, obtainer 110 obtains flag information indicating true or false as to whether the object generates an aerodynamic sound. If the obtained flag information indicates true, generator 130 generates a first acoustic signal.

In this manner, as shown in Operation Example 2, acoustic signal processing device 100 according to this embodiment generates the first acoustic signal, only when the flag information indicates true. That is, there is no need for acoustic signal processing device 100 to generate the first acoustic signal, when the flag information indicates false. This can further reduce the processing load for generating an aerodynamic sound (i.e., the wind sound) caused by movement of the object (i.e., bat B).

In this embodiment, the flag information includes a threshold that is the minimum value of the moving speed of an object that generates an aerodynamic sound. When the obtained flag information indicates true and the detected moving speed is over the threshold indicated by the obtained flag information, generator 130 generates the first acoustic signal.

Accordingly, as shown in Operation Example 3, acoustic signal processing device 100 according to this embodiment, only when the flag information indicates true and the moving speed is over the threshold, the first acoustic signal is generated. That is, when the flag information indicates false or when the moving speed is lower than or equal to the threshold, there is no need for acoustic signal processing device 100 to generate the first acoustic signal. This can further reduce the processing load for generating an aerodynamic sound (i.e., the wind sound) caused by movement of the object (i.e., bat B).

Acoustic signal processing device 100 according to this embodiment includes obtainer 110, detector 120, generator 130, and outputter 140. Obtainer 110 obtains location information indicating the location of an object in a virtual space, and second shape information indicating the shape of the object and including the thicknesses at one or more points of one or more sub-objects forming the object. Detector 120 detects the moving speed of the object in the virtual space, based on the obtained location information. Generator 130 generates a first acoustic signal indicating an aerodynamic sound generated by the object, based on the detected moving speed and the obtained second shape information. Outputter 140 outputs the generated first acoustic signal.

Generator 130 calculates the frequencies of the aerodynamic sounds generated at one or more points, when the object moves the detected moving speed, based on the one or more thicknesses indicated by the obtained second shape information. Generator 130 generates a second acoustic signal by processing white noise signals using band pass filters each having one of the one or more calculated frequencies as the center frequency. Generator 130 generates, as the first acoustic signal, one second acoustic signal or a combination of two or more second acoustic signals out of the one or more generated second acoustic signals.

Accordingly, as shown in Operation Example 5, acoustic signal processing device 100 according to this embodiment can generate the first acoustic signal indicating the aerodynamic sound, based on the second shape information and the moving speed of the object according to the location information. Accordingly, acoustic signal processing device 100 can generate the first acoustic signal indicating the aerodynamic sound caused by movement of the object, without requiring the identification process, the detection process, the output process, or the other processes described above. This first acoustic signal, for example, is output to headphones 200, allowing the listener to listen the aerodynamic sound. That is, acoustic signal processing device 100 with a reduced processing load for generating an aerodynamic sound caused by movement of an object is achieved.

In addition, the one or more second acoustic signals are generated based on the second shape information. The one or more second acoustic signals each indicate an aerodynamic sound generated at one point of one of one or more sub-objects. Here, generator 130 generates, as a first acoustic signal, one second acoustic signal or a combination of two or more of second acoustic signals. That is, the first acoustic signal indicating an aerodynamic sound generated by the object is generated based on the second acoustic signals indicating the aerodynamic sound generated by one or more sub-objects. A realistic aerodynamic sound can thus be generated.

The acoustic signal processing method according to this embodiment includes obtaining, detecting, generating, and outputting. The obtaining is obtaining location information indicating a location of an object in a virtual space, and first shape information indicating the shape of the object and used for generating a video of the object in the virtual space. The detecting is detecting the moving speed of the object in the virtual space, based on the obtained location information. The generating is generating a first acoustic signal indicating an aerodynamic sound generated by the object, based on the detected moving speed and the obtained first shape information. The outputting is outputting the generated first acoustic signal.

Accordingly, as shown in Operation Example 1, the acoustic signal processing method according to this embodiment can generate the first acoustic signal indicating an aerodynamic sound (i.e., the wind sound), based on the first shape information and the moving speed of the object (i.e., bat B) according to the location information. Accordingly, the acoustic signal processing method according to this embodiment can generate the first acoustic signal indicating an aerodynamic sound (i.e., the wind sound) caused by movement of the object (i.e., bat B), without requiring the identification process, the detection process, the output process, or the other processes described above. This first acoustic signal, for example, is output to headphones 200, allowing the listener to listen the aerodynamic sound (i.e., the wind sound). That is, the acoustic signal processing method with a reduced processing load for generating an aerodynamic sound (i.e., the wind sound) caused by movement of an object is achieved.

A computer program according to an aspect of the present disclosure may be for causing a computer to execute the acoustic signal processing method described above.

Accordingly, the computer can execute the acoustic signal processing method described above in accordance with the computer program.

In this embodiment, the white noise in the description of using "white noise" is an example of a signal containing a noise component, and is not limited to thereto. That is, strict whiteness with a flat frequency component is not necessarily essential. The white noise may be what is called a "pink noise" with a specific slope, or a noise signal (e.g., a signal obtained by compressing and decoding white noise or other type of noise by MP3) lacking a high frequency component.

(Other embodiments)

While acoustic signal processing device 100 and the acoustic signal processing method according to the present disclosure have been described above based on the embodiment, the present disclosure is not limited thereto. For example, other embodiments achieved by freely combining the elements described in the present specifications or excluding some of the elements may be provided as embodiments of the present disclosure. Variations obtained by performing, on the embodiment described above, various variations conceived by a person skilled in the art without departing from the spirit of the present disclosure, that is, meanings indicated by recitation in the scope of claims are also included in the present disclosure.

Embodiments which will be described below may also be included as one or a plurality of embodiments of the present disclosure.

(1) A part of the constituent elements of acoustic signal processing device 100 described above may be a computer system including a microprocessor, a ROM, a RAM, a hard disk unit, a display unit, a keyboard, a mouse, and any other suitable elements. The RAM or the hard disk unit stores computer programs. The microprocessor operates in accordance with the computer programs to achieve its functions. Here, a computer program is formed by combining a plurality of command codes indicating instructions for a computer to fulfill a predetermined function.

(2) A part of the constituent elements of acoustic signal processing device 100 described above may be formed using one system large scale integration (LSI) circuit. The system LSI circuit is an ultra-multifunctional LSI circuit manufactured by integrating a plurality of components on one chip, and is more specifically a computer system including a microprocessor, a ROM, a RAM, and any other suitable elements. The RAM stores computer programs. The microprocessor operates in accordance with the computer programs so that the system LSI circuit fulfills its functions.

(3) A part of the elements of acoustic signal processing device 100 described above may be formed using an IC card which is removable from each device or a single module. The IC card or the module is a computer system including a microprocessor, a ROM, a RAM, and any other suitable elements. The IC card or the module may include the ultra-multifunctional LSI circuit described above. The microprocessor operates in accordance with computer programs so that the IC card or the module fulfills its functions. The IC card or the module may be tamper-resistant.

(4) A part of the elements of acoustic signal processing device 100 described above may be the computer programs or digital signals stored in a non-transitory computer-readable recording medium, and examples of the non-transitory computer-readable recording medium include a flexible disk, a hard disk, a CD-ROM, an MO, a DVD, a DVD-ROM, a DVD-RAM, a Blu-ray (registered trademark) disc (BD), a semiconductor memory, and other media. A part of the constituent elements of the acoustic reproduction device described above may be digital signals stored in these recording media.

A part of the elements of acoustic signal processing device 100 described above may transmit the computer programs or the digital signals via a network, data broadcasting, for example, such as a telecommunications line, a wireless or wired communication line, or the Internet.

(5) The present disclosure may be directed to the method described above. The present disclosure may also be directed to a computer program which causes a computer to execute the method, or may also be directed to digital signals of the computer programs.

(6) The present disclosure may also be directed to a computer system including a microprocessor and a memory. The memory may store the computer programs described above. The microprocessor may operate in accordance with the computer programs.

(7) The programs or the digital signals are stored in the recording medium and are transferred, or the programs or the digital signals are transferred via the network described above, for example, to be executed by another independent computer system.

[Industrial Applicability]

The present disclosure can be used for an acoustic signal processing device and an acoustic signal processing method, and is particularly applicable to an acoustic system, for example.

[Reference Signs List]

| 100 | acoustic signal processing device |
|---|---|
| 110 | obtainer |
| 120 | detector |
| 130 | generator |
| 140 | outputter |
| 150 | storage |
| 200 | headphones |
| 300 | display |
| 400 | airplane |
| 410 | fuselage |
| 420 | vertical stabilizer |
| 431 | first horizontal stabilizer |
| 432 | second horizontal stabilizer |
| 441 | first engine |
| 442 | second engine |
| 451 | first main wing |
| 452 | second main wing |
| 461 | first winglet |
| 462 | second winglet |
| 500 | server device |
| B | bat |
| C | child |
| P | professional baseball player |

**Claims**

1.  An acoustic signal processing device comprising:

    an obtainer that obtains location information indicating a location of an object in a virtual space, and first shape information indicating a shape of the object and used for generating a video of the object in the virtual space;
a detector that detects a moving speed of the object in the virtual space, based on the location information obtained;
a generator that generates a first acoustic signal indicating an aerodynamic sound generated by the object, based on the moving speed detected and the first shape information obtained; and
an outputter that outputs the first acoustic signal generated.

2. The acoustic signal processing device according to claim 1, wherein

the obtainer obtains flag information indicating true or false as to whether the object generates the aerodynamic sound, and
the generator generates the first acoustic signal when the flag information obtained indicates true.

3. The acoustic signal processing device according to claim 2, wherein

the flag information includes a threshold that is a minimum value of the moving speed of the object that generates the aerodynamic sound, and
the generator generates the first acoustic signal when the flag information obtained indicates true and the moving speed detected exceeds the threshold indicated by the flag information obtained.

4. An acoustic signal processing device comprising:

an obtainer that obtains location information indicating a location of an object in a virtual space, and second shape information indicating a shape of the object and including one or more thicknesses at one or more points of one or more sub-objects forming the object;
a detector that detects a moving speed of the object in the virtual space, based on the location information obtained;
a generator that generates a first acoustic signal indicating an aerodynamic sound generated by the object, based on the moving speed detected and the second shape information obtained; and
an outputter that outputs the first acoustic signal generated, wherein
the generator

calculates one or more frequencies of aerodynamic sounds generated at the one or more points while the object is moving at the moving speed detected, based on the one or more thicknesses indicated by the second shape information obtained,
generates one or more second acoustic signals by processing white noise signals at band pass filters each having, as a center frequency, one of the one or more frequencies calculated, and
generates, as the first acoustic signal, one second acoustic signal or a combination of two or more second acoustic signals out of the one or more second acoustic signals generated.

5. An acoustic signal processing method comprising:

obtaining location information indicating a location of an object in a virtual space, and first shape information indicating a shape of the object and used for generating a video of the object in the virtual space;
detecting a moving speed of the object in the virtual space, based on the location information obtained;
generating a first acoustic signal indicating an aerodynamic sound generated by the object, based on the moving speed detected and the first shape information obtained; and
outputting the first acoustic signal generated.

6. A computer program for causing a computer to execute the acoustic signal processing method according to claim 5.

FIG. 1

# FIG. 2

# FIG. 3

FIG. 4

(a)

(b)

(c)

# FIG. 5

100

## Acoustic signal processing device

130

Generator

140

Outputter

200

Headphones

120

Detector

150

Storage

300

Display

110

Obtainer

500

Server device

# FIG. 6

(a)

(b)

B

C

(c)

B

P

EP 4 510 627 A1

# FIG. 7

```
        ┌─────────────┐
        │    Start     │
        └──────┬───────┘
               │                         S10
    ┌──────────▼──────────────────┐
    │   Obtain location information │
    │   and first shape information │
    └──────────┬──────────────────┘
               │                         S20
    ┌──────────▼──────────────────┐
    │   Detect moving speed of object │
    │   based on location information │
    └──────────┬──────────────────┘
               │                         S30
    ┌──────────▼──────────────────┐
    │ Generate first acoustic signal indicating │
    │ aerodynamic sound generated by object, based │
    │ on moving speed and first shape information │
    └──────────┬──────────────────┘
               │                         S40
    ┌──────────▼──────────────────┐
    │   Output first acoustic signal │
    └──────────┬──────────────────┘
               │
        ┌──────▼───────┐
        │     End      │
        └─────────────┘
```

FIG. 8

# FIG. 9

Frequency (Hz)

## FIG. 10

Start

Obtain location information, first shape information, and flag information — S11

Detect moving speed of object based on location information — S20

Does flag information indicate true? — S21 → No

Yes — S30

Generate first acoustic signal indicating aerodynamic sound generated by object, based on moving speed and first shape information

Output first acoustic signal — S40

End

## FIG. 11

```
        Start
          │
          ▼                              S12
┌────────────────────────────────────┐
│ Obtain location information, first  │
│ shape information, and flag         │
│ information including threshold     │
│ that is minimum value of moving     │
│ speed                               │
└────────────────────────────────────┘
          │
          ▼                              S20
┌────────────────────────────────────┐
│ Detect moving speed of object      │
│ based on location information      │
└────────────────────────────────────┘
          │
          ▼                              S22
╱──────────────────────────────────────╲
│ Does flag information indicate true   │  No
│ and is moving speed over threshold    ├────┐
│ that is minimum value?                │    │
╲──────────────────────────────────────╱    │
          │ Yes                    S30        │
          ▼                                   │
┌────────────────────────────────────┐       │
│ Generate first acoustic signal      │       │
│ indicating aerodynamic sound        │       │
│ generated by object, based on       │       │
│ moving speed and first shape        │       │
│ information                          │       │
└────────────────────────────────────┘       │
          │                         S40        │
          ▼                                   │
┌────────────────────────────────────┐       │
│ Output first acoustic signal        │◄──────┘
└────────────────────────────────────┘
          │
          ▼
        End
```

EP 4 510 627 A1

# FIG. 12

```
          ┌──────────┐
          │  Start   │
          └──────────┘
                │
                ▼                                S13
┌──────────────────────────────────────────────┐
│ Obtain location information, first shape       │
│ information, and threshold that is minimum     │
│ value of moving speed                          │
└──────────────────────────────────────────────┘
                │
                ▼                                S20
┌──────────────────────────────────────────────┐
│ Detect moving speed of object                  │
│ based on location information                  │
└──────────────────────────────────────────────┘
                │
                ▼                                S23
        ╱─────────────────────────────╲   No
       ╱  Is moving speed over threshold ╲──────┐
       ╲  that is minimum value?         ╱      │
        ╲─────────────────────────────╱        │
                │ Yes                   S30      │
                ▼                                │
┌──────────────────────────────────────────────┐│
│ Generate first acoustic signal indicating      ││
│ aerodynamic sound generated by object, based   ││
│ on moving speed and first shape information     ││
└──────────────────────────────────────────────┘│
                │                        S40      │
                ▼                                │
┌──────────────────────────────────────────────┐│
│ Output first acoustic signal                   ││
└──────────────────────────────────────────────┘│
                │◄───────────────────────────────┘
                ▼
          ┌──────────┐
          │   End    │
          └──────────┘
```

30

## FIG. 13

```
┌─────────────┐
│    Start    │
└─────────────┘
       │
       ▼                                              S14
┌──────────────────────────────────────────┐
│ Obtain location information and           │
│ second shape information                  │
└──────────────────────────────────────────┘
       │
       ▼                                              S24
┌──────────────────────────────────────────┐
│ Detect moving speed of object             │
│ based on location information             │
└──────────────────────────────────────────┘
       │
       ▼                                              S34
┌──────────────────────────────────────────┐
│ Generate first acoustic signal indicating │
│ aerodynamic sound generated by object,    │
│ based on moving speed and second shape    │
│ information                               │
└──────────────────────────────────────────┘
       │
       ▼                                              S44
┌──────────────────────────────────────────┐
│ Output first acoustic signal              │
└──────────────────────────────────────────┘
       │
       ▼
┌─────────────┐
│     End     │
└─────────────┘
```

FIG. 14

(a)

(b)

# FIG. 15

```
┌──────────────┐
│     S24      │
└──────────────┘
        │
        ▼                                          ⤺ S34
┌─────────────────────────────────────┐         S34a
│ Calculate frequencies of aerodynamic sounds
│ generated at one or more points by object
│ moving at above moving speed, based on one
│ or more thicknesses indicated by second shape
│ information                           │
└─────────────────────────────────────┘
        │
        ▼                                         S34b
┌─────────────────────────────────────┐
│ Generate second acoustic signal by processing
│ white noise signals at band pass filters each
│ having, as center frequency, one of
│ frequencies of one or more aerodynamic
│ sounds                                │
└─────────────────────────────────────┘
        │
        ▼                                         S34c
┌─────────────────────────────────────┐
│ Generate, as first acoustic signal, one second
│ acoustic signal or combination of two or more
│ second acoustic signals out of one or more
│ second acoustic signals               │
└─────────────────────────────────────┘
        │
        ▼
┌──────────────┐
│     S44      │
└──────────────┘
```

# FIG. 16

EP 4 510 627 A1

## INTERNATIONAL SEARCH REPORT

| International application No. |
|---|
| **PCT/JP2023/012504** |

**A. CLASSIFICATION OF SUBJECT MATTER**

*H04S 7/00*(2006.01)i; *G06T 19/00*(2011.01)i
FI:  H04S7/00 300; G06T19/00 300B

According to International Patent Classification (IPC) or to both national classification and IPC

**B. FIELDS SEARCHED**

Minimum documentation searched (classification system followed by classification symbols)

H04S7/00; G06T19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-47219 A (RITSUMEIKAN) 07 April 2016 (2016-04-07)<br>entire text, all drawings | 1-6 |
| A | JP 2008-35320 A (KONAMI DIGITAL ENTERTAINMENT CO., LTD.) 14 February 2008 (2008-02-14)<br>entire text, all drawings | 1-6 |
| A | JP 2013-12811 A (SQUARE ENIX CO., LTD.) 17 January 2013 (2013-01-17)<br>entire text, all drawings | 1-6 |
| A | JP 11-88998 A (ROLAND CORP.) 30 March 1999 (1999-03-30)<br>entire text, all drawings | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2023** | **27 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/012504**

| Patent document cited in search report | | | Publication date (day/month/year) | Patent family member(s) | Publication date (day/month/year) |
|---|---|---|---|---|---|
| JP | 2016-47219 | A | 07 April 2016 | (Family: none) | |
| JP | 2008-35320 | A | 14 February 2008 | (Family: none) | |
| JP | 2013-12811 | A | 17 January 2013 | (Family: none) | |
| JP | 11-88998 | A | 30 March 1999 | (Family: none) | |

Form PCT/ISA/210 (patent family annex) (January 2015)

**EP 4 510 627 A1**

**REFERENCES CITED IN THE DESCRIPTION**

**Patent documents cited in the description**

- JP H07312800 A